# EUROPEAN PATENT APPLICATION

(11) **EP 4 517 864 A2**
(43) Date of publication of application: **05.03.2025**
(21) Application number: 24195575.6
(22) Date of filing: 21.08.2024
(51) Int. Cl.: H01M 4/133, H01M 4/134, H01M 4/36, H01M 4/38, H01M 4/587, H01M 10/0525, H01M 4/02

(54) **NEGATIVE ELECTRODE ACTIVE MATERIAL FOR SECONDARY BATTERY, METHOD OF PREPARING THE SAME AND LITHIUM SECONDARY BATTERY COMPRISING THE SAME**

(30) Priority: 28.08.2023 KR 20230112639
(71) Applicant: ECOPRO BM CO., LTD., Cheongju-si, Chungcheongbuk-do 28117 (KR)
(72) Inventor: SUH, Jun Won, 28116 Cheongju-si (KR); LEE, Chong Min, 28116 Cheongju-si (KR); LEE, Dongwook, 28116 Cheongju-si (KR); JEON, Minyeong, 28116 Cheongju-si (KR); CHAE, Taesung, 28116 Cheongju-si (KR)
(74) Representative: Beck & Rössig European Patent Attorneys

(57) **Abstract**

There are provided a negative electrode active materials including a silicon/carbon (Si/C) composite in which a silicon-based coating layer is formed on carbon-based particles, wherein the Si/C composite has a peak area ratio A2/A1 of 0.2 to 3.0 as determined by X-ray diffraction analysis, and a method of preparing a negative electrode active material for a secondary battery, which includes a pretreatment step of heat treating carbon-based particles; and a microwave sintering step of mixing silicon-based particles with the heat-treated carbon-based particles and irradiating the resulting mixture with microwaves.

## Description

### BACKGROUND

### 1. Field of the Invention

The present invention relates to a negative electrode active material for a secondary battery, a method of preparing the same, and a lithium secondary battery including the same.

### 2. Discussion of Related Art

In recent years, as the demand for electronic devices such as mobile devices and the like has increased, the development of technology for mobile devices has expanded. Demand for lithium secondary batteries, such as lithium batteries, lithium ion batteries, lithium ion polymer batteries, and the like, as power sources for driving these electronic devices has significantly increased. Also, as the automobile fuel economy and exhaust gas-related regulations are being strengthened around the world, the growth of the electric vehicle market is accelerating. Therefore, it is expected that the demand for mid- to large-sized secondary batteries such as secondary batteries for electric vehicles (EVs), secondary batteries for energy storage systems (ESSs), and the like will rapidly increase.

Meanwhile, in recent years, as secondary batteries, such as mid- and large-sized secondary batteries, are increasingly required to have higher capacities, research has been conducted on silicon-based negative electrode materials having excellent theoretical capacity as negative electrode materials for secondary batteries. However, the silicon-based negative electrode materials may cause a significant volume change upon intercalation/deintercalation of lithium, thereby causing electrical detachment due to pulverization of silicon particles and loss of reversible capacity during repeated charging and discharging cycles.

In order to solve the problems of mechanical damage to electrodes caused by the volume expansion and contraction of silicon and the resulting rapid shortening of their lifespan, research has been conducted on performance improvement using a method of compositing with a heterogeneous material capable of buffering the volume expansion of silicon and a method of preparing silicon into nanoparticles. In particular, the technical aspect for a process of compositing silicon (nano) particles and graphite and the commercialization aspect of reducing the cost of a process of preparing silicon nanoparticles are being actively developed.

The present invention relates to a method of preparing a composite negative electrode material in which a carbon-based material is composited with nano-sized silicon in a single process and provides a method of preparing a silicon-carbon composite by which silicon nanoparticles are formed on the surface of carbon using microwaves. Silicon has a melting point of 1,414°C and when melted, its density increases more than when it is in a solid state like water. Graphite (a carbon-based material) has the characteristic of rapid heat generation when the π electrons present in the structure are alternately induced in negative (-) and positive (+) directions using microwaves (wavelength: 1 m to 1 mm; frequency: 300 MHz to 300 GHz). By applying this phenomenon, silicon having a lower melting point than graphite may be melt-processed on the surface of graphite, and the entropy may rapidly increase by rapid energy transfer, which makes it possible to prepare a silicon nanomaterial having an increased specific surface area on the surface of graphite (graphite composited with nano-sized silicon).

The method of preparing a silicon-carbon composite using microwaves is a method of directly transferring energy to the surface of carbon. Regardless of the medium used to support the carbon material, when carbon is irradiated with microwaves, only the temperature of the carbon itself rises rapidly, and when microwave irradiation is stopped, it cools rapidly. Therefore, it has the advantage of reducing the manufacturing time and energy costs compared to existing heating methods.

However, because energy is transferred only to an area which is irradiated with microwaves, there is a problem that silicon nanoparticles are not uniformly formed on the entire surface of carbon (graphite) or the deposited silicon particles become more coarse and thinner. In this case, it is difficult to sufficiently buffer the volume expansion of silicon particles upon intercalation/deintercalation of lithium.

Also, silicon carbide (SiC), which is synthesized at a high temperature of 900°C or higher, is generated as a by-product on the surface of carbon (graphite), which is rapidly heated to around 1,400°C by microwaves. Such silicon carbide is inert to lithium ions and prevents lithium ions from diffusing into silicon particles, leading to a decrease in capacity and efficiency.

### SUMMARY OF THE INVENTION

Therefore, it is an aspect of the present invention to provide a Si/C composite prepared through a sintering process using microwaves, and a method of preparing the same, wherein the method has a technical feature in performing a process of preparing silicon nanoparticles; and a process of compositing silicon and a carbon-based material (Si/C composite) in a single process.

It is another aspect of the present invention to suppress the coarsening and thinning of silicon particles deposited on the surface of carbon by improving the microwave absorption capacity of carbon (graphite) and to uniformly form silicon nanoparticles on the entire surface of carbon.

It is still another aspect of the present invention to provide a Si/C composite having improved initial charge/discharge capacity by suppressing the production of silicon carbide (SiC) that is an inert material.

According to an aspect of the present invention, there is provided a negative electrode active material including a silicon/carbon (Si/C) composite in which a silicon-based coating layer is formed on carbon-based particles, wherein the Si/C composite has a peak area ratio A2/A1 of 0.2 to 3.0 as determined by X-ray diffraction analysis. Here, A1 may be an area of the Si peak in X-ray diffraction analysis, and A2 may be an area of the SiC peak in X-ray diffraction analysis.

The Si/C composite may have a peak area ratio A2/A1 of 0.3 to 0.5 as determined by X-ray diffraction analysis. Here, A1 may be an area of the Si peak in X-ray diffraction analysis, and A2 may be an area of the SiC peak in X-ray diffraction analysis.

The Si/C composite may have a Si peak area (A1) of 2 to 7% and a SiC peak area (A2) of 0.5 to 5.5% with respect to 100% of the total peak area in X-ray diffraction analysis.

The Si/C composite may have a BET specific surface area (B2) of 8 m²/g or more.

The Si/C composite may have a BET specific surface area (B2) of 8 to 23 m²/g.

The Si/C composite may have a BET specific surface area ratio B2B 1 of 1 or more. Here, B 1 may be a BET specific surface area of carbon-based particles before forming the silicon-based coating layer in the Si/C composite, and B2 may be a BET specific surface area of the Si/C composite.

The Si/C composite may have a BET specific surface area ratio B2B 1 of 1.2 to 2.5. Here, B 1 may be a BET specific surface area of carbon-based particles before forming the silicon-based coating layer in the Si/C composite, and B2 may be a BET specific surface area of the Si/C composite.

The Si/C composite may have a specific surface area contribution rate (B2_C) of the carbon-based particles ranging from 50 to 89.5% and a specific surface area contribution rate (B2_Si) of the silicon-based coating layer ranging from 10.5 to 50%, with respect to 100% of the total BET specific surface area (B2).

The Si/C composite may have a BET specific surface area contribution rate (B2_C) of the carbon-based particles ranging from 60 to 80% and a BET specific surface area contribution rate (B2_Si) of the silicon-based coating layer ranging from 20 to 40%, with respect to 100% of the total BET specific surface area (B2).

The silicon-based coating layer may include silicon nanoparticles having a size of 1 to 100 nm.

The silicon-based coating layer may be included in an amount of 5 to 50% by weight based on the total weight of the Si/C composite.

The silicon-based coating layer may be formed to a thickness of 10 to 200 nm.

The carbon-based particles may be at least one selected from the group consisting of natural graphite, artificial graphite, expanded graphite, graphene oxide, carbon nanotubes, carbon fibers, and hard carbon.

The carbon-based particles may have a colorimetric L* value of 35 or less.

According to another aspect of the present invention, there is provided a method of preparing a negative electrode active material for a secondary battery, which includes a pretreatment step of heat treating carbon-based particles; and a microwave sintering step of mixing silicon-based particles with the heat-treated carbon-based particles and irradiating the resulting mixture with microwaves.

The pretreatment step may be a process of heat treating the carbon-based particles at 400 to 900°C for 1 to 10 hours.

The microwave sintering step may be a process of rapidly heating the surfaces of the heat-treated carbon-based particles with microwaves and melting the silicon-based particles using the carbon-based particles heated with the microwaves to form a silicon-based coating layer on a surface of the carbon-based material.

The microwave heating may involve microwave irradiation at an output of 1 to 3 kW for 10 seconds to 10 minutes.

According to still another aspect of the present invention, there is provided a negative electrode for a secondary battery including the negative electrode active material.

According to yet another aspect of the present invention, there is provided a secondary battery including the negative electrode.

### BRIEF DESCRIPTION OF THE DRAWINGS

FIGS. 1A to 1D are SEM images of the surfaces of Si/C composites prepared in Comparative Example 1 and Examples 1 to 3, respectively.
FIG. 1E is an SEM image of graphite particles before pretreatment (left SEM image) and after pretreatment (right SEM image) according to Comparative Example 2.
FIGS. 2A to 2D are X-ray diffraction (XRD) graphs of the Si/C composites prepared in Comparative Example 1 and Examples 1 to 3, respectively.
FIG. 3 is an image showing hot spots formed on the surfaces of carbon-based particles through microwave irradiation (Microwave Chemical and Materials Processing Doi.org/10.1007/978-981-10-6466-1_4).

### DETAILED DESCRIPTION OF EXEMPLARY EMBODIMENTS

Advantages and features of the present invention, and methods for achieving them will be apparent with reference to the embodiments described below in detail in conjunction with the accompanying drawings. However, it should be understood that the present invention is not limited to the embodiments disclosed below and may be implemented in various different forms. In this specification, the embodiments are merely provided to make the disclosure of the present invention complete and to fully inform the scope of the invention to those skilled in the art to which the present invention pertains. Thus, the present invention is only defined by the scope of the claims.

Unless otherwise defined, all terms (including technical and scientific terms) used in the present specification may be used with meanings which may be commonly understood by those skilled in the art to which the present invention pertains. When it is said that a part "includes" a certain element throughout the specification, this means that the part may further include other elements, rather than excluding the other elements, unless specifically stated to the contrary. Also, the singular forms are intended to include the plural forms as well, unless the context clearly specifies otherwise.

One exemplary embodiment of the present invention provides a negative electrode active material including a silicon/carbon (Si/C) composite in which a silicon-based coating layer is formed on carbon-based particles. In the present invention, the problem of mechanical damage to electrodes caused by the volume expansion and contraction of silicon and the resulting rapid shortening of lifespan may be improved through compositing with carbon-based particles capable of buffering the volume expansion of silicon.

The Si/C composite may have a peak area ratio A2/A1 of 0.2 to 3.0, for example, a peak area ratio A2/A1 of 0.2 to 2.5, 0.2 to 2, 0.2 to 1.5, 0.2 to 1, 0.2 to 0.8, 0.2 to 0.7, 0.2 to 0.6, 0.2 to 0.6, 0.3 to 0.6, or 0.3 to 0.5, as determined by X-ray diffraction analysis.

A1 is a peak area at all angles corresponding to the Si peaks in X-ray diffraction analysis, and A2 is a peak area at all angles corresponding to the SiC peaks in X-ray diffraction analysis. Also, all the angles (2theta) corresponding to the Si peaks in X-ray diffraction analysis may be 28.4 ± 0.5°, 47.3 ± 0.5°, 56.1 ± 0.5°, 69.1 ± 0.5°, 76.4 ± 0.5°, and 88.0 ± 0.5°, respective crystal planes may be (111), (202), (311), (400), (313), and (422), all the angles (2theta) corresponding to the SiC peaks may be 35.6 ± 0.5°, 41.4 ± 0.5°, 59.9 ± 0.5°, 71.7 ± 0.5°, 75.5 ± 0.5°, and 89.9 ± 0.5°, and respective crystal planes may be (111), (020), (202), (311), (222), and (040). For reference, all the angles (2theta) corresponding to the graphite peaks may be 26.5 ± 0.5°, 42.3 ± 0.5°, 44.5 ± 0.5°, 50.6 ± 0.5°, 54.6 ± 0.5°, 59.8 ± 0.5°, 71.4 ± 0.5°, and 77.4 ± 0.5°, respective crystal planes may be (002), (100), (101), (012), (004), (013), (014), and (110).

When the peak area ratio is less than or equal to the upper limit, the proportion of silicon nanoparticles deposited on the surfaces of the carbon-based particles may increase by suppressing the production of silicon carbide (SiC), which is an inert material. When the peak area ratio is greater than or equal to the lower limit, the carbon-based particles and the silicon in a solid state before melting are dispersed and mixed uniformly so that the melting proportion of solid silicon on the surfaces of the microwave-irradiated carbon-based particles is high and the melting proportion of unreacted silicon is low, meaning that the Si/C composite manufacturing efficiency is improved.

Silicon carbide (SiC), which is synthesized at a high temperature of 900°C or higher and is inert to lithium ions, may be deposited on the surfaces of carbon-based particles that are rapidly heated to around 1,400°C by microwaves.

In the present invention, the microwave absorption capacity of the carbon-based particles may be improved by forming surface defects using pretreated carbon-based particles. Improvements in microwave absorption and heat generation performance may be confirmed by reducing the hot spot formation time on the surfaces of carbon-based particles. In the present invention, as the hot spot formation time is reduced, a uniform temperature rise and rapid heating/cooling of the carbon-based particles are possible, thereby reducing the residence time in the high temperature range where a SiC synthesis reaction occurs. Also, the shape formation of the molten silicon may be controlled by the uneven structures (defects) on the surfaces of the pretreated (heat-treated) carbon-based particles, thereby preventing silicon particle coarsening and interparticle connection (thinning). Accordingly, the physical contact area between silicon and carbon-based particles where the SiC synthesis reaction occurs may be reduced, which makes it possible to further reduce the amount of SiC synthesis.

Meanwhile, in the present invention, when the carbon-based particles are irradiated with microwaves, the hot spots of carbon-based particles refers to the fact that a uniform reaction does not occur at all locations within the same time, but rather a reaction occurs first in a specific part. This phenomenon may be defined as a "hot spot." Hot spots that occur on the surfaces of carbon-based particles may be observed with the naked eye, and the "hot spot time" may be measured based on when the reaction first occurs.

In X-ray diffraction analysis, the Si/C composite may have a Si peak area (A1) of 2 to 7%, for example, a Si peak area (A1) of 2.5 to 7%, 2.5 to 6.5%, 2.5 to 6%, 2.5 to 5.5%, 2.5 to 5%, or 2.5 to 4%, with respect to 100% of the total peak area. Also, the SiC peak area (A2) with respect to 100% of the total peak area may be 0.5 to 5.5%, 0.5 to 5%, 1 to 5%, 2 to 5%, 3 to 5%, 3.5 to 5%, 3.5 to 4.5%, or 4 to 4.5%. Accordingly, the above-described effect may be further improved.

Meanwhile, 100% of the total peak area may refer to the sum of the peak area at all angles corresponding to the Si peaks (A1), the peak area at all angles corresponding to the SiC peaks (A2), and the peak area at all angles corresponding to the graphite peaks (A3).

The Si/C composite may have a BET specific surface area (B2) of 8 m²/g or more, for example, a BET specific surface area (B2) of 8 to 23 m²/g, 8 to 20 m²/g, 8 to 17 m²/g, 8 to 15 m²/g, 8 to 14 m²/g, 8 to 13 m²/g, 9 to 13 m²/g, or 9 to 12 m²/g.

When the silicon-carbon composite is prepared using microwaves, silicon is only deposited on the surfaces of the carbon-based particles heated by microwave irradiation. Therefore, it is analyzed that the silicon melted by the microwave sintering reaction does not block the uneven structure and pore structure of the surfaces of the pretreated carbon-based particles. It was confirmed that the BET specific surface area of the Si/C composite finally prepared after the microwave sintering reaction may be adjusted to a relatively high level compared to before the reaction. Meanwhile, when the BET specific surface area falls within the above range, it may mean that silicon particles are uniformly dispersed and deposited on the surfaces of the carbon-based particles in a nano size. Also, when the BET specific surface area is less than the lower limit, it means that silicon particles in the form of a thin film are deposited. When the BET specific surface area is greater than the upper limit, the particle structure collapses and the basal surface of the graphite is exposed, which may cause electrolyte side reactions due to an excessive increase in specific surface area.

The Si/C composite may have a BET specific surface area ratio B2/B1 of 1 or more, for example, a BET specific surface area ratio B2/B1 of 1.1 or more, 1.2 or more, 1.3 or more, 1.4 or more, or 1.5 or more, and 2.5 or less, 2.4 or less, 2.3 or less, 2.2 or less, 2.1 or less, or 2.0 or less. B1 is a BET specific surface area of the carbon-based particles before forming a silicon-based coating layer in the Si/C composite, and B2 is a BET specific surface area of the Si/C composite (after forming the silicon-based coating layer). When the BET specific surface area ratio B2/B1 is greater than or equal to the lower limit, this may mean that the rate at which molten silicon is deposited in the form of nanoparticles on the surfaces of the microwave-irradiated carbon-based particles increases, and silicon particle coarsening and interparticle connection (thinning) are controlled. On the other hand, when the particle size of the silicon deposited on the surfaces of the carbon-based particles increases or the silicon particles are connected to form a thin film (a network form), the BET specific surface area may be reduced by the silicon coating layer. Also, when the BET specific surface area ratio B2/B1 is less than or equal to the upper limit, the melting proportion of solid silicon on the surfaces of the microwave-irradiated carbon-based particles is high and the proportion of unreacted silicon is low, meaning that the overall Si/C composite manufacturing efficiency is improved.

The Si/C composite may have a specific surface area contribution rate (B2_C) of the carbon-based particles ranging from 50 to 89.5% and a specific surface area contribution rate (B2_Si) of the silicon-based coating layer ranging from 10.5 to 50% with respect to 100% of the total BET specific surface area (B2). Here, the specific surface area contribution rate (B2_C) of the carbon-based particles is calculated as a percentage of the BET specific surface area of the Si/C composite by measuring the BET specific surface area of graphite (pretreated graphite) treated with microwaves in the same manner, except that Si powder was not used. The specific surface area contribution rate (B2_Si) of the silicon coating layer is a value obtained by subtracting the specific surface area ratio of the carbon-based particles from 100% of the total BET specific surface area of the Si/C composite.

For example, the Si/C composite may have a contribution rate (B2_C) of the carbon-based particles ranging from 50 to 85%, 55 to 80%, 60 to 80%, or 65 to 75%, and a contribution rate (B2_Si) of the silicon coating layer ranging from 15 to 50%, 20 to 45%, 20 to 40%, or 25 to 35%, with respect to 100% of the total BET specific surface area (B2).

As the contribution rate (B2_Si) of the silicon coating layer increases and the contribution rate (B2_C) of the carbon-based particles decreases, the proportion at which molten silicon is deposited in the form of nanoparticles on the surfaces of the microwave-irradiated carbon-based particles may increase. Conversely, as the contribution rate (B2_Si) of the silicon coating layer decreases and the contribution rate (B2_C) of the carbon-based particles increases, this may mean that the total BET specific surface area increases due to a change in morphology of the surfaces of the microwave-irradiated carbon-based particles, and unreacted silicon increases.

The carbon-based particles may be at least one selected from the group consisting of natural graphite, artificial graphite, expanded graphite, graphene oxide, carbon nanotubes, carbon fibers, and hard carbon. For example, natural graphite or artificial graphite may be preferable. Also, the carbon-based particles may be single particles or secondary particles in which a plurality of particles are aggregated.

Also, the carbon-based particles have an average particle diameter (D50) of 5 to 30 µm, 5 to 20 µm, or 10 to 20 µm, an average particle diameter (D10) of 3 to 20 µm, 3 to 15 µm, or 5 to 15 µm, and/or an average particle diameter (D90) of 15 to 35 µm, 15 to 30 µm, or 20 to 25 µm.

In addition, the carbon-based particles may be spherical, plate-shaped, and needle-shaped particles. In this case, when the (porous, hollow, core-shell, multi-layer, and hierarchical) structure of the material is adjusted as in the plate-shaped and needle-shaped particles, the absorption capacity of a microwave absorber may be further improved by expanding the propagation path of microwaves.

The conditions for controlling the heating of the carbon-based particles through microwaves include the type, content, and particle shape of the carbon material. When the type, average particle diameter, and shape of the carbon-based particles fall within the scope of the present invention, the microwave absorption capacity may be improved.

The carbon-based particles may have a colorimetric L* value of 35 or less, for example, a colorimetric L* value of 34 or less, 33 or less, or 32 or less. The lower limit is not particularly limited, but may be, for example, 10 or more, 20 or more, 25 or more, or 30 or more.

The term "colorimetric L* value" used in the present invention may refer to an L value representing brightness in the color coordinates such as L*a*b*. The L value is displayed from 0 to 100, with a value closer to 0 indicating black and a value closer to 100 indicating white. In the present invention, the heat-treated carbon-based particles may have increased light absorption due to surface defects, resulting in a decrease in the colorimetric L* value. When the colorimetric L* value of the carbon-based particles falls within the design range, the heat generation performance of the carbon-based particles may be improved by forming defects on the surface of the heat-treated carbon-based particles, and the shape formation of molten silicon may be controlled due to the uneven structure (defect) on the surfaces of the heat-treated carbon-based particles, thereby preventing silicon particle coarsening and interparticle connection (thinning).

Meanwhile, there is no limitation to the equipment for measuring the colorimetric value, but equipment such as a spectrophotometer, a colorimeter, a color reader, a chroma meter, and the like may be, for example, used. For example, the colorimetric value may be measured using a chroma meter CR-410 KONICA MINOLTA meter.

The silicon-based coating layer may include silicon (Si) particles having a size of 10 to 100 nm. Specifically, the silicon nanoparticles included in the silicon-based coating layer may have a particle size (D50) of 10 to 100 nm or 20 to 100 nm. In the present invention, the shape formation of molten silicon on the surfaces of particles may be controlled using pretreated carbon-based particles having a concave-convex structure (defect) formed on the surface thereof. As a result, silicon particle coarsening and interparticle connection (thinning) may be prevented.

Meanwhile, the size of the silicon (Si) particles may refer to a size (D50) measured by cumulative volume. Unless otherwise defined herein, D50 refers to an average size, which means the diameter of pores having a cumulative volume of 50% by volume in the particle size distribution. The average size (D50) may be measured by a method well known to those skilled in the art, and may also be, for example, measured using a transmission electron micrograph or a scanning electron micrograph. As another method, the average size (D50) value may be obtained by measuring the average size (D50) using a measuring device using a dynamic light scattering method, performing data analysis to count the number of pores for each pore size range, and then calculating the average size (D50) value therefrom.

The silicon-based coating layer may be included in an amount of 1 to 50% by weight, for example, 1 to 40% by weight, 1 to 30% by weight, 5 to 30% by weight, or 5 to 20% by weight, based on the total weight of the Si/C composite. Also, the silicon-based coating layer may be formed to a thickness of 10 to 200 nm, for example, a thickness of 10 to 180 nm, 10 to 160 nm, 10 to 150 nm, or 10 to 130 nm.

The Si/C composite may further include a carbon coating layer located on the silicon coating layer. By minimizing direct exposure of silicon in the silicon-based coating layer to an electrolyte, electrolyte side reactions may be reduced, and the volume expansion of silicon particles may be further buffered, thereby improving the lifespan characteristics of batteries. The carbon coating layer may be formed to a thickness of 0.01 µm or more, for example, a thickness of 0.03 µm or more, 0.05 µm or more, and a thickness of 10 µm or less, 5 µm or less, or 1 µm or less. Accordingly, the above-described effects may be further improved.

Hereinafter, a method of preparing a negative electrode active material for a secondary battery is provided. The preparation method may be a method of preparing the negative electrode active material according to one exemplary embodiment of the present invention.

The method of preparing a negative electrode active material for a secondary battery includes a pretreatment step of heat treating carbon-based particles; and a microwave sintering step of mixing silicon-based particles with the heat-treated carbon-based particles and irradiating the resulting mixture with microwaves.

The pretreatment step is a process of heat treating the carbon-based particles at 400 to 900°C for 1 to 10 hours. The pretreatment step is intended to improve the heat generation performance of the carbon-based particles during the sintering step of irradiating the mixture with microwaves by forming defects on the surfaces of the carbon-based particles. The heat generation performance of the carbon-based particles may be improved through the formation of defects on the surfaces of the heat-treated carbon-based particles. In the pretreatment step, heat treatment may be, for example, performed in an air atmosphere at a temperature increase rate of 1 to 10°C/min or 2 to 7°C/min and a reactor temperature of 400 to 800°C, 400 to 700°C, or 400 to 600°C for 1 to 6 hours, 2 to 6 hours, or 3 to 6 hours.

The pretreatment step is a process of heat treating carbon-based particles, characterized in that the carbon-based particles are heat-treated so that the weight reduction rate of the carbon-based particles before and after heat treatment (weight of carbon-based particles after heat treatment/weight of carbon-based particles before heat treatment × 100 (%)) can be greater than 1% by weight and less than 40% by weight, greater than 5% by weight and less than 30% by weight, greater than 10% by weight and less than 25% by weight, greater than 14% by weight and less than 25% by weight, or greater than 15% by weight and less than 20% by weight.

The sintering step is a process of mixing silicon-based particles with the heat-treated carbon-based particles to obtain a mixture in which the silicon-based particles are dispersed on the surfaces of the carbon-based particles, rapidly heating the surfaces of the heat-treated carbon-based particles in the mixture with microwaves, and melting the silicon-based particles using the carbon-based particles heated with the microwaves to form a silicon-based coating layer on the surface of the carbon-based material.

The mixing may be performed for 1 to 10 minutes at 500 to 2,000 RPM or 700 to 1,500 RPM using a particle mixer, and a rotating stirrer, an orbital stirrer, a blade mixer, or a particle fusion device may be used as the particle mixer, but the present invention is not limited thereto.

Also, the mixing may be performed by mixing the carbon-based particles and the silicon-based particles at a weight ratio of 99:1 to 60:40, a weight ratio of 99:1 to 70:30, a weight ratio of 95:5 to 70:30, or a weight ratio of 95:5 to 80:20.

The carbon-based particles may be natural graphite, artificial graphite, expanded graphite, graphene oxide, carbon nanotubes, carbon fiber, hard carbon, or a combination thereof, and the silicon-based particles may be a silicon particle powder having a size of 10 nm to 10 µm, 100 nm to 10 µm, or 100 nm to 5 µm.

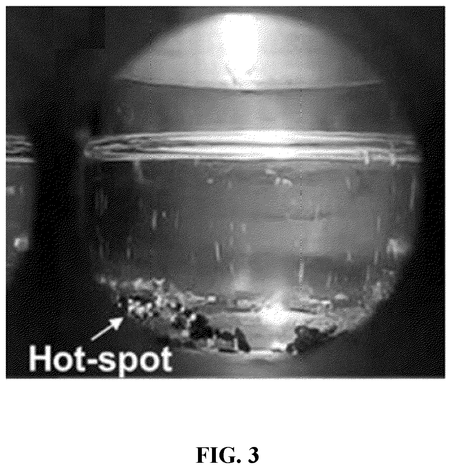

The microwave heating may be performed by microwave irradiation (wavelength: 1 m to 1 mm; frequency: 300 MHz to 300 GHz) at an output of 1 to 3 kW for 10 seconds to 10 minutes, 30 seconds to 2 minutes, or 30 seconds to 60 seconds. Also, the microwave heating may be performed by heating the surfaces of the carbon-based particles to 1,400°C or higher within 1 minute, for example, by heating the surfaces of the carbon-based particles to 1,400°C or higher within 30 seconds or within 10 seconds. When the heat-treated carbon-based particles are irradiated with microwaves, the formation time of hot spots on the surfaces of particles may be shortened by forming defects on the surfaces of the heat-treated carbon-based particles to improve microwave absorption and heat generation performance. In the present invention, the hot spot formation time may be shortened to 5 to 30 seconds, 5 to 25 seconds, 5 to 20 seconds, 10 to 20 seconds, or 10 to 15 seconds. Meanwhile, referring to FIG. 3, the term "hot spot" refers to a phenomenon in which a reaction does not occur equally in all areas when microwaves (MW) are irradiated due to the nature of MW, but rather a reaction occurs partially first. In this patent, the term refers to a phenomenon in which heat generation is observed first. Meanwhile, a method of measuring the hot spot formation time was to measure the moment at which the heat-generated area was observed with the naked eye, as shown in FIG. 3. In the present invention, the microwave absorption capacity may be improved as defects are formed on the surfaces of the pretreated graphite particles. Accordingly, as the surface heat generation characteristics of carbon particles are improved upon microwave irradiation, the time at which a heat generation phenomenon is observed may be shortened.

After the microwave sintering step, a cooling step may be further included to prevent the crystallinity of the silicon-based material deposited on the surface from increasing due to thermal energy remaining in the carbon-based particles. The cooling step may be carried out at room temperature or a temperature of -10 to 10°C under normal pressure conditions, and preferably carried out in a cooled reactor into which nitrogen gas is injected.

Another exemplary embodiment of the present invention provides a negative electrode for a secondary battery and a secondary battery including the negative electrode active material.

The negative electrode includes a negative electrode current collector and a negative electrode active material layer located on the negative electrode current collector, and the negative electrode active material according to one aspect of the present invention is present in the negative electrode active material layer.

The negative electrode current collector is not particularly limited as long as it is conductive without causing a chemical change in the battery. For example, stainless steel, aluminum, nickel, titanium, calcined carbon, or aluminum or stainless steel surface-treated with carbon, nickel, titanium, silver, and the like may be used. Also, the negative electrode current collector may typically have a thickness of 3 to 500 µm, and fine irregularities may also be formed on the surface of the current collector to increase the adhesion of the negative electrode active material. Such a negative electrode current collector may be provided in various forms such as films, sheets, foils, nets, porous materials, foams, non-woven fabrics, and the like.

The negative electrode active material layer may be a layer including a conductive material and a binder along with the above-described negative electrode active material.

The conductive material is used to provide conductivity to the electrode, and may be used without particular limitation as long as it has conductivity without causing a chemical change in the negative electrode active material. Non-limiting examples of the conductive material include graphite such as natural graphite or artificial graphite; carbon-based materials such as carbon black, acetylene black, Ketjen black, channel black, furnace black, lamp black, summer black, carbon fibers, and the like; metal powders or metal fibers such as copper, nickel, aluminum, silver, and the like; conductive whiskers such as zinc oxide, potassium titanate, and the like; conductive metal oxides such as titanium oxide and the like; or conductive polymers such as polyphenylene derivatives and the like. The conductive material may typically be included in an amount of 1 to 30% by weight based on the total weight of the negative electrode active material layer.

The binder is a material that serves to improve the adhesion between negative electrode active material particles and the adhesion between the negative electrode active material and the current collector. Non-limiting examples of the binder include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorinated rubber, or various copolymers thereof. The binder may typically be included in an amount of 1 to 30% by weight based on the total weight of the negative electrode active material layer.

The negative electrode according to one exemplary embodiment of the present invention may be manufactured according to a conventional method of preparing a negative electrode for a secondary battery, except that the above-described negative electrode active material is used. For example, a negative electrode may be manufactured by applying a slurry for forming a negative electrode active material layer, which includes a negative electrode active material and, optionally, a binder and a conductive material, onto a negative electrode current collector, followed by drying and rolling. According to another example, a negative electrode may be manufactured by casting a slurry for forming a negative electrode active material layer on a separate support, peeling the negative electrode active material layer from the support, and then laminating the film thus obtained on the negative electrode current collector.

According to still another aspect of the present invention, an electrochemical device including the above-described negative electrode is provided. Here, the electrochemical device may specifically be a battery, a capacitor, and the like. More specifically, the electrochemical device may be a lithium secondary battery.

The secondary battery includes a negative electrode, a positive electrode positioned to face the negative electrode, a separator interposed between the negative electrode and the positive electrode, and an electrolyte. Also, the lithium secondary battery may include a battery container (case) that accommodates an electrode assembly including a positive electrode, a negative electrode, and a separator, and a sealing member that seals the battery container.

In this case, depending on the shape of the battery container (case), lithium secondary batteries may be classified into can-type lithium secondary batteries in which the electrode assembly is built into a metal can, and pouch-type lithium secondary batteries in which the electrode assembly is built in a pouch made of a sheet such as an aluminum laminate.

Hereinafter, the present invention will be described in detail through examples. However, it should be understood that these examples are provided to describe the present invention in more detail, and are not intended to limit the scope of the present invention.

### EXAMPLES

### Preparation Example 1: Preparation of Si/C composite negative electrode active material

### <Examples 1 to 3 and Comparative Example 1>

### Step 1: Graphite pretreatment

20g of natural graphite (D50: 15 µm) was weighed into a crucible, and then charged into a tube furnace. The natural graphite was heat-treated at 560°C for 1 to 5 hours at a temperature increase rate of 5°C/min under air atmosphere conditions to obtain pretreated graphite. The weight reduction rate of graphite after pretreatment relative to the graphite before pretreatment is shown in Table 1 below.
(Heat treatment time = Example 1: 1 hour, Example 2: 4 hours, Example 3: 5 hours, Comparative Example 1: No heat treatment, Comparative Example 2: 7 hours)

### Step 2: Si/C compositing through microwave irradiation

Pretreated natural graphite and plate-shaped Si particle (D50: 400 nm) powder were charged into a super mixer at a weight ratio of 9:1 and mixed at 1,000 RPM for 10 minutes. Then, the resulting mixture was irradiated with microwaves at 2,450 MHz for 60 seconds at an output of 1 kW. At this time, the hot spot formation time is shown in Table 1 below.

Next, cooling was performed at -5°C/min to prepare a Si/C composite negative electrode active material in which a silicon coating layer was formed on the pretreated natural graphite.

Here, the hot spot formation time is a measurement of the time when hot spots first occur on the surfaces of the carbon-based particles, and reflects the results of visual observation as shown in FIG. 3.

**[Table 1]**

| | Step 1 | | Step 2 |
|---|---|---|---|
| | Heat treatment time (h) | Graphite weight reduction rate (% by weight) | Hot spot formation time (sec) |
| Comparative Example 1 | - | - | 31 |
| Example 1 | 1 | 1.6 | 26 |
| Example 2 | 4 | 14.3 | 15 |
| Example 3 | 5 | 19.9 | 13 |
| Comparative Example 2 | 7 | 40.0 | 8 |

### Preparation Example 2: Manufacture of lithium secondary battery

A negative electrode slurry was prepared by dispersing 96% by weight of the prepared negative electrode active material, 1 % by weight of carbon black, 1.5 % by weight of an SBR binder, and 1.5 % by weight of carboxymethyl cellulose in 30 g of distilled water. The prepared negative electrode slurry was uniformly applied on a Cu thin film, and vacuum-dried at 135°C to manufacture a negative electrode for a lithium secondary battery.

A positive electrode slurry was prepared by mixing 94% by weight of LiNi_{0.9}Co_{0.1}Mn_{0.1}O₂ (NCM911, Ecopro BM), 3% by weight of carbon black, and 3% by weight of a PVdF binder in N-methyl-2-pyrrolidone. The prepared positive electrode slurry was uniformly applied on an Al thin film, vacuum-dried at 135°C, and then rolled to manufacture a positive electrode for a lithium secondary battery.

The manufactured positive and negative electrodes and a porous polyethylene separator (Celgard 2300, thickness: 25 µm) were input into a battery container, and a lithium secondary battery was manufactured using an electrolyte solution containing LiPF₆ at a concentration of 1.15 M in a solvent in which EC and EMC were mixed at a volume ratio of 3:7.

### EXPERIMENTAL EXAMPLES

### Experimental Example 1: Confirmation of shape of silicon coating layer on surfaces of carbon particles by SEM image analysis

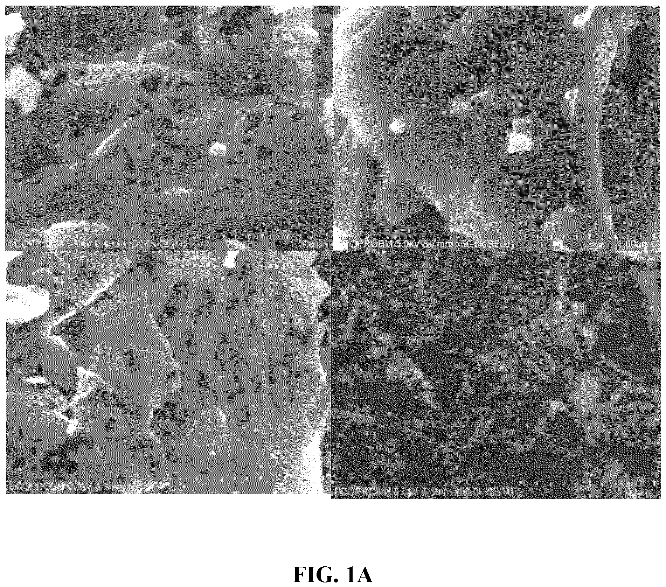

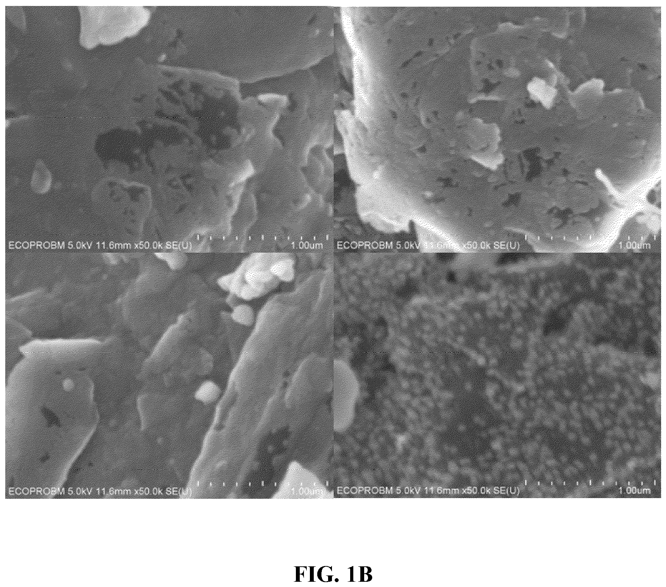

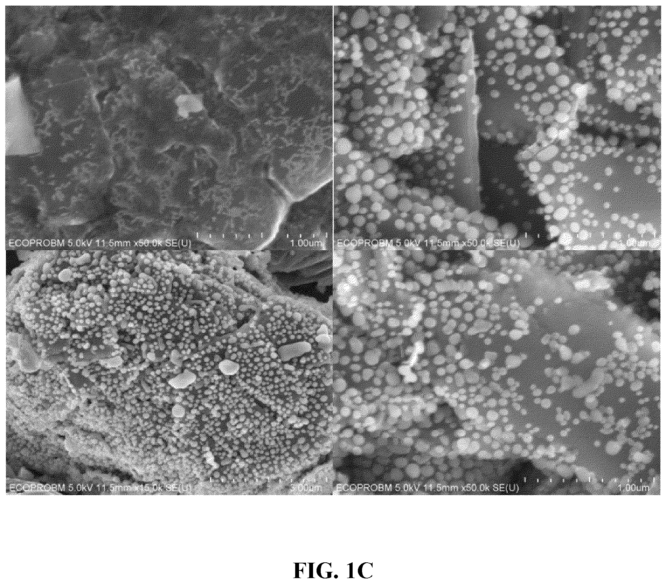

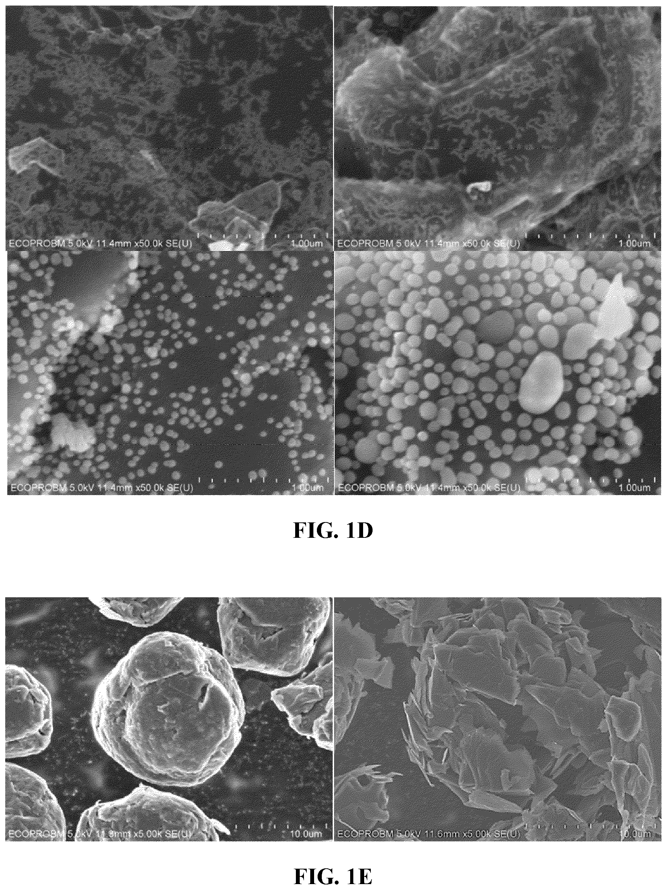

FIGS. 1A to 1D are SEM images of surfaces of Si/C composites prepared in Comparative Example 1 and Examples 1 to 3, respectively.

Referring to FIGS. 1A to 1D, it can be seen that Si nanoparticles having a size of 1 to 100 nm were uniformly deposited on the surface of graphite in the Si/C composites prepared in Examples 1 to 3. In particular, it was found that the deposition rate of Si nanoparticles in the spherical form on the surface of graphite increased as the graphite weight reduction rate and graphite heat treatment time increased within the desirable ranges. On the other hand, in the case of Comparative Example 1, it was confirmed that the silicon deposition form and size were not uniform due to the size coarsening of Si particles and the connected structure (network structure) between the particles.

### Experimental Example 2: Evaluation of characteristics of carbon-based particles and surface characteristics of Si/C composite according to heat treatment conditions for carbon-based particles

The BET specific surface areas of the Si/C composites prepared in Comparative Examples 1 and 2 and Examples 1 to 3 were measured using a BET method. The results are summarized in Table 2 below.

In Table 2 below, "pretreated graphite (B1)" is a BET specific surface area value of the pretreated graphite (graphite before forming a silicon-based coating layer in the Si/C composite) prepared in Step 1. "Si/C composite (B2)" is a BET specific surface area value of the Si/C composite prepared in Step 2. "Microwave-treated graphite (R)" is a BET specific surface area value of microwave-treated (pretreated) graphite prepared in the same manner as in Step 2 (microwave irradiation), except that the Si powder was not used.

The specific surface area ratio (B2B 1) is a value obtained by calculating the BET specific surface area (B2) of the Si/C composite after forming the silicon-based coating layer with respect to the BET specific surface area (B 1) of the carbon-based particles before forming the silicon-based coating layer.

The specific surface area ratio (B2/R) is a value obtained by calculating the BET specific surface area (B2) of the Si/C composite after forming the silicon-based coating layer with respect to the BET specific surface area (R) of the microwave-treated (pretreated) graphite prepared in the same manner as in Step 2 (microwave irradiation), except that the Si powder was not used.

The specific surface area contribution rate (B2_C) is calculated as a percentage of the BET specific surface area of the Si/C composite by measuring the BET specific surface area of graphite (pretreated graphite) treated with microwaves in the same manner, except that the Si powder was not used. Specifically, the specific surface area contribution rate (B2_C) is a value calculated as a percentage of the BET specific surface area (R) of the microwave-treated graphite with respect to the BET specific surface area (B2) of the Si/C composite.

**[Table 2]**

| | Graphite weight reduction rate (% by weight) | BET specific surface area (m²/g) | | | Proportion | | |
|---|---|---|---|---|---|---|---|
| | | B1 | R | B2 | B2/B1 | B2/R | B2_C (%) |
| Comparative Example 1 | 0 | 2.58 | 6.16 | 6.87 | 2.7 | 1.1 | 89.7 |
| Example 1 | 1.6 | 4.58 | 8.54 | 9.56 | 2.1 | 1.1 | 89.3 |
| Example 2 | 14.3 | 7.39 | 8.05 | 10.97 | 1.5 | 1.4 | 73.4 |
| Example 3 | 19.9 | 7.44 | 7.87 | 10.98 | 1.5 | 1.4 | 71.7 |
| Comparative Example 2 | 40.0 | 16.85 | 21.0 2 | 23.29 | 1.4 | 1.1 | 90.2 |

Referring to Table 2, the BET specific surface areas (B2) of the Si/C composites prepared in all the examples increased to more than 9.5 m²/g compared to Comparative Example 1, and the BET specific surface area tended to increase as the graphite weight reduction rate and graphite heat treatment time increased within the desirable ranges.

The specific surface area ratio (B2B 1) was highest at 2.7 m²/g in Comparative Example 1, and tended to decrease as the graphite weight reduction rate increased (Example 1 → Comparative Example 2).

The specific surface area contribution rate (B2_C) was relatively high in Comparative Examples 1 and 2, and tended to decrease in the examples as the graphite weight reduction rate increased (Example 1 → Example 3). Especially, it was confirmed that the specific surface area contribution rate (B2_C) of carbon significantly decreased in Examples 2 and 3 compared to Comparative Examples 1 and 2 and Example 1.

When non-pretreated graphite was used (Comparative Example 1), the proportion of an increase in specific surface area by microwave sintering due to the change in surface morphology of graphite was higher than in the examples. Accordingly, it was analyzed that unreacted silicon relatively increased in Comparative Example 1. Also, since the total BET specific surface area (B2) of the Si/C composite was significantly smaller in Comparative Example 1 than in the examples, it was analyzed that the coarsening and deposition rate of silicon particles in the form of interparticle connection were high.

On the other hand, when pretreated graphite was used (Examples 1 to 3), it was possible to improve heat generation performance and control the shape formation of the silicon melt through the surface defects of carbon-based particles. Accordingly, it was analyzed that the proportion of silicon deposited in the form of nanoparticles increased. These analysis results are consistent with the SEM images of FIGS. 1A to 1D.

Meanwhile, FIG. 1E is an SEM image of graphite particles before pretreatment (left SEM image) and after pretreatment (right SEM image) according to Comparative Example 2. Referring to FIG. 1E and Table 2, when the weight reduction rate of pretreated graphite reached 40%, the particle structure collapsed and the heat generation performance was excessively improved. Accordingly, it was analyzed that the BET increase rate decreased as the SiC crystal phase increased and the proportion of Si deposited in the form of a thin film increased.

### Experimental Example 3: XRD analysis of Si/C composite and evaluation of electrochemical characteristics of lithium secondary battery

XRD analysis was performed using Bruker's D8 ADVANCE A25, and measurements were made by applying a current of 30 mA at a voltage of 45 kV. The analysis of each phase was compared using COD Nos. 4104917 (Si), 1011031 (SiC), and 9011577 (graphite). The obtained results confirmed all positions of peaks corresponding to respective crystal phases. The peak information of each crystal phase is shown in Table 3 below.

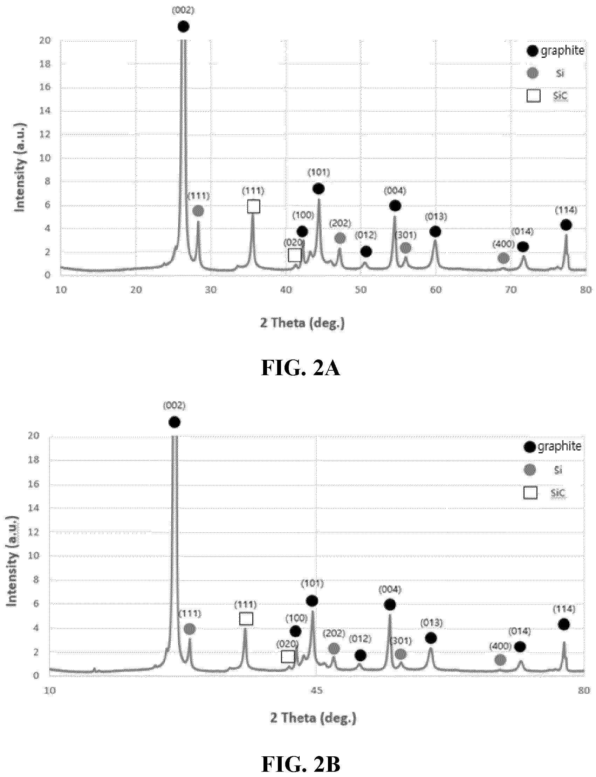

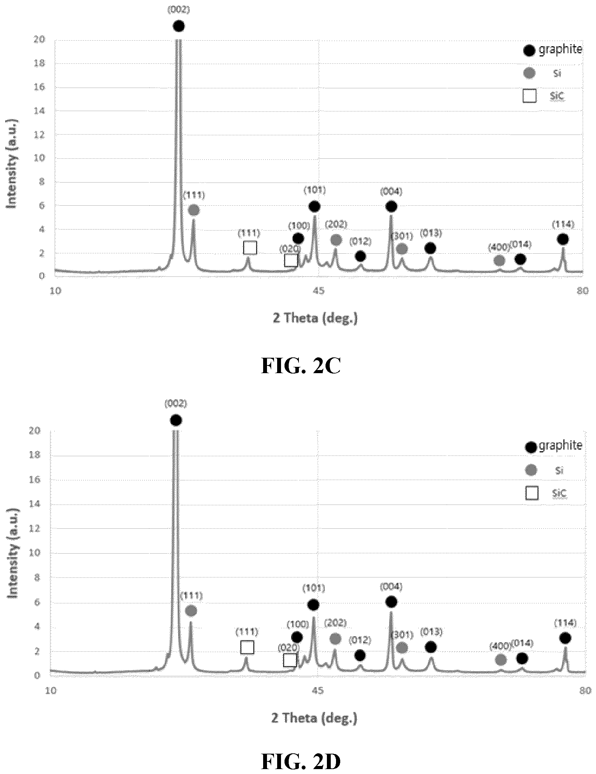

By deconvolving the peaks thus obtained (FIGS. 2A to 2D), the peak area A1 (%) corresponding to Si and the peak area A2 (%) corresponding to SiC were obtained, respectively. The measurement results are shown in Table 4 below.

Electrochemical characterization was performed by a charge/discharge test using an electrochemical analysis device (Shincorp, Toscat-3100) at 25°C, a voltage range of 0.005 V to 1.5 V, and a C-rate of 0.1C to 0.5C to determine initial charge capacity, initial discharge capacity, and initial efficiency (ICE). The measurement results are shown in Table 4 below.

**[Table 3]**

| Classification | 2theta (°) (crystal plane) | | | | | | | |
|---|---|---|---|---|---|---|---|---|
| Si | 28.4 (111) | 47.3 (202) | 56.1 (311) | 69.1 (400) | 76.4 (313) | 88.0 (422) | - | - |
| SiC | 35.6 (111) | 41.4 (020) | 59.9 (202) | 71.7 (311) | 75.5 (222) | 89.9 (040) | - | - |
| Graphite | 26.5 (002) | 42.3 (100) | 44.5 (101) | 50.6 (012) | 54.6 (004) | 59.8 (013) | 71.4 (014) | 77.4 (110) |

**[Table 4]**

| | XRD analysis (peak area) (%) | | | Electrochemical characterization | | |
|---|---|---|---|---|---|---|
| | Si(111) (A1) | SiC(111) (A2) | A2/A1 | Charge capacity (mAh/g) | Discharge capacity (mAh/g) | ICE (%) |
| Comparative Example 1 | 1.8 | 5.5 | 3.1 | 404 | 354 | 87.6 |
| Example 1 | 2.0 | 5.0 | 2.5 | 426 | 378 | 88.7 |
| Example 2 | 4.2 | 1.8 | 0.4 | 495 | 430 | 86.9 |
| Example 3 | 4.3 | 1.7 | 0.4 | 513 | 446 | 86.9 |
| Comparative Example 2 | 1.7 | 5.3 | 3.7 | 518 | 408 | 78.7 |

Referring to Table 4, it can be seen that the generation of SiC, which is an inert material, was suppressed when heat-treated graphite was applied in the case of the lithium secondary batteries prepared in Examples 1 to 3, thereby improving the charge/discharge capacity and initial efficiency.

Meanwhile, in the case of Comparative Example 2, when excessively pretreated graphite was used, the particle structure collapsed and the basal surface of the graphite was exposed. As a result, it was analyzed that the initial coulombic efficiency was lowered due to excessive electrolyte exposure.

In the present invention, when the pretreated carbon-based particles are used, the microwave absorption capacity can be improved due to defects formed on the surfaces of the carbon-based particles. Since a uniform temperature rise and rapid heating/cooling of the carbon-based particles are possible, the residence time (retention time) in the temperature range (approximately 900°C) where the SiC synthesis reaction occurs can be reduced, thereby reducing the amount of SiC synthesis.

Also, in the present invention, the form in which molten silicon is deposited (adhered) on the surface of the carbon-based particles can be controlled by the uneven structure (defect) on the surfaces of the pretreated (heat-treated) carbon-based particles, thereby preventing the silicon particle coarsening and interparticle connection (thinning) phenomena.

Further, by controlling the BET specific surface area of the Si/C composite to a specific range, silicon particles can be uniformly dispersed and deposited on the surfaces of the carbon-based particles in a nano size. Accordingly, it is possible to prevent silicon particles from becoming coarse or being deposited in the form of a thin film. As a result, the problem of electrolyte side reactions due to an excessive increase in specific surface area can be improved.

As described above, the present invention has been shown and described with reference to specific embodiments thereof. However, it should be understood by those skilled in the art that the present invention can be modified and changed in various ways without departing from the appended claims.

## Claims

1. A negative electrode active material comprising a silicon/carbon (Si/C) composite in which a silicon-based coating layer is formed on carbon-based particles,
wherein the Si/C composite has a peak area ratio A2/A1 of 0.2 to 3.0 as determined by X-ray diffraction analysis,
where A1 represents an area of the Si peak in X-ray diffraction analysis, and A2 represents an area of the SiC peak in X-ray diffraction analysis.

2. The negative electrode active material of claim 1, wherein the Si/C composite has a peak area ratio A2/A1 of 0.3 to 0.5 as determined by X-ray diffraction analysis,
(where A1 represents an area of the Si peak in X-ray diffraction analysis, and A2 represents an area of the SiC peak in X-ray diffraction analysis).

3. The negative electrode active material of claim 1, wherein the Si/C composite has a Si peak area (A1) of 2 to 7% and a SiC peak area (A2) of 0.5 to 5.5% with respect to 100% of the total peak area in X-ray diffraction analysis.

4. The negative electrode active material of one of claims 1 to 3, wherein the Si/C composite has a Brunauer-Emmett-Teller (BET) specific surface area (B2) of 8 m²/g or more, preferably of 8 to 23 m²/g.

5. The negative electrode active material of one of claims 1 to 4, wherein the Si/C composite has a BET specific surface area ratio B2B 1 of 1 or more, preferably of 1.2 to 2.5,
where B1 represents a BET specific surface area of the carbon-based particles before forming the silicon-based coating layer in the Si/C composite, and B2 represents a BET specific surface area of the Si/C composite.

6. The negative electrode active material of one of claims 1 to 5, wherein the Si/C composite has a BET specific surface area contribution rate (B2_C) of the carbon-based particles ranging from 50 to 89.5% and a BET specific surface area contribution rate (B2_Si) of the silicon-based coating layer ranging from 10.5 to 50%, with respect to 100% of the total BET specific surface area (B2), and preferablythe Si/C composite has a BET specific surface area contribution rate (B2_C) of the carbon-based particles ranging from 60 to 80% and a BET specific surface area contribution rate (B2_Si) of the silicon-based coating layer ranging from 20 to 40%, with respect to 100% of the total BET specific surface area (B2).

7. The negative electrode active material of one of claims 1 to 6, wherein the silicon-based coating layer includes silicon nanoparticles having a size of 1 to 100 nm.

8. The negative electrode active material of one of claims 1 to 7,
wherein the silicon-based coating layer is included in an amount of 5 to 50% by weight based on the total weight of the Si/C composite; and/or
wherein the silicon-based coating layer is formed to a thickness of 10 to 200 nm.

9. The negative electrode active material of one of claims 1 to 8, wherein the carbon-based particles are at least one selected from the group consisting of natural graphite, artificial graphite, expanded graphite, graphene oxide, carbon nanotubes, carbon fibers, and hard carbon.

10. The negative electrode active material of one of claims 1 to 9, wherein the carbon-based particles have a colorimetric L* value of 35 or less.

11. A method of preparing a negative electrode active material for a secondary battery, comprising:
a pretreatment step of heat treating carbon-based particles; and
a microwave sintering step of mixing silicon-based particles with the heat-treated carbon-based particles and irradiating the resulting mixture with microwaves.

12. The method of claim 11, wherein the pretreatment step is a process of heat treating the carbon-based particles at 400 to 900°C for 1 to 10 hours.

13. The method of claim 10 or 11, wherein the microwave sintering step is a process of rapidly heating surfaces of the heat-treated carbon-based particles with microwaves and melting the silicon-based particles using the carbon- based particles heated with the microwaves to form a silicon-based coating layer on a surface of the carbon-based material, wherein, preferably the microwave heating involves microwave irradiation at an output of 1 to 3 kW for 10 seconds to 10 minutes.

14. A negative electrode for a secondary battery comprising the negative electrode active material of one of claims 1 to 10.

15. A secondary battery comprising the negative electrode of claim 14.
